# EUROPEAN PATENT APPLICATION

(11) **EP 4 339 453 A1**
(43) Date of publication of application: **20.03.2024**
(21) Application number: 22196326.7
(22) Date of filing: 19.09.2022
(51) Int. Cl.: F03D 7/02

(54) **METHOD FOR OPERATING A WIND TURBINE, CONTROL SYSTEM AND WIND TURBINE**

(71) Applicant: Nordex Energy SE & Co. KG, 22419 Hamburg (DE)
(72) Inventor: Buller, Valeri, 22419 Hamburg (DE); Niss, Michael, 22419 Hamburg (DE); Veress, Attila-Todor, 22419 Hamburg (DE)
(74) Representative: Epping - Hermann - Fischer

(57) **Abstract**

The method is for operating a wind turbine (100) having a rotor (10) with at least one rotor blade (1, 2, 3), a tower (20) and a pitch setting system (13). The method comprises a step of providing first information which is representative for the tilt bending moment acting on the rotor. In another step, second information is provided which is representative for the thrust force acting on the rotor. In yet another step, third information is provided which is representative for a critical area of thrust forces and tilt bending moments. In another step, fourth information is determined depending on the first, the second and the third information. The fourth information is representative for whether the tilt bending moment and the thrust force lie within the critical area. If this is the case, an output signal is generated which is configured to cause the pitch setting system to change the pitch angle of the at least one rotor blade in order to leave the critical area.

## Description

The present disclosure relates to a method for operating a wind turbine. Furthermore, the disclosure relates to a computer program, a computer-readable data carrier and a control device for performing the method for operating a wind turbine. Moreover, the present disclosure relates to a control system for operating a wind turbine and a wind turbine.

Wind turbines are widely known and are used to convert wind energy into electrical energy. The lengths of the rotor blades used in such wind turbines have increased in recent years. With the increasing lengths, the danger of a collision of the rotor blades with the tower has increased.

One object to be achieved is, therefore, to provide a method for operating a wind turbine which reduces the risk of a collision of the rotor blades with the tower. Further objects to be achieved are to provide a computer program, a computer-readable data carrier and a control device for performing such a method. Additional objects to be achieved are to provide a control system for operating a wind turbine with such a method and a wind turbine which is operable with such a method.

First, the method for operating a wind turbine is specified.

According to an embodiment, the method is for operating a wind turbine having a rotor with at least one rotor blade, a tower and a pitch setting system for setting the pitch angle of the at least one rotor blade. The method comprises a step of providing first information. The first information is representative for the tilt bending moment acting on the rotor. In another step, second information is provided. The second information is representative for the thrust force acting on the rotor. In yet another step, third information is provided which is representative for a critical area of thrust forces and tilt bending moments. In another step, fourth information is determined depending on the first, the second and the third information. The fourth information is representative for whether the tilt bending moment and the thrust force lie within the critical area. If this is the case, a further step is executed in which an output signal is generated. The output signal is configured to cause the pitch setting system to change the pitch angle of the at least one rotor blade in order to leave the critical area.

The present invention is, inter alia, based on the recognition that a large thrust force in combination with a negative tilt bending moment, i.e. a tilt bending moment acting in order to tilt the lower part of the rotor plane towards the tower, bears the risk of the rotor blades colliding with the tower when passing the tower. The inventors therefore had the idea to (temporarily) control the pitch angles of the rotor blades in order to reduce the thrust force acting on the rotor and thus to reduce the deflection of the rotor blades towards the tower. However, the control of the pitch angles is only performed if the thrust force and the tilt bending moment lie within a predetermined, critical area of thrust forces and tilt bending moments. In this way, good differentiation between critical production situations and power clearance critical situations is obtained. Consequently, as a big advantage, the annual energy production (AEP) loss due to the pitching maneuver is kept relatively small.

The method specified herein is, in particular, a computer-implemented method, i.e. is performed by a computer or a processor.

Herein, if information is representative for a certain quantity or certain quantities, this means that the quantity or quantities can be extracted from the information, either directly, or the quantity/quantities can at least be derived from the information, particularly without using further information. In other words, the quantity/quantities is/are stored in the information or at least data are stored in the information from which the quantity/quantities can be derived or determined or calculated, respectively. Furthermore, here and in the following, information is, in particular, electronic information, like electronic data.

The first information is, in particular, determined with the help of measurements. Consequently, the tilt bending moment extractable from the first information may also be referred to as measured tilt bending moment. It may be an estimation of the actual tilt bending moment of the rotor. The first information may comprise the corresponding measurement data.

The tilt bending moment of the rotor is a quantity in a fixed reference frame, i.e. a reference frame which is fixed with respect to the environment and/or with respect to the tower. The tilt bending moment is the moment acting on the rotor in order to tilt the rotor plane around an axis running parallel to the ground and parallel to the rotor plane. The rotor plane is the plane in which the rotor blades rotate or the plane perpendicular to the rotational axis of the rotor, respectively.

The second information is representative for the thrust force acting on the rotor. The second information may also be determined with the help of measurements, and, accordingly, the thrust force extractable from the second information may be referred to as measured thrust force. Thus, also here, the thrust force extractable from the second information may be an estimation of the actual thrust force acting on the rotor. The second information may comprise corresponding measurement data. The thrust force acts in a direction perpendicular to the rotor plane or parallel to the rotational axis of the rotor, respectively.

The first information and the second information are, in particular, representative for the same time. For example, the measurements taken to determine the first information and the measurements taken to determine the second information are taken at the same time or at least within a time interval which is shorter than the time interval for one full rotation or shorter than for half a rotation of the rotor.

The third information is representative for a (predetermined) critical area of thrust forces and tilt bending moments. For example, the critical area is a two-dimensional area in a two-dimensional coordinate system with one coordinate being the thrust force and the other coordinate being the tilt bending moment. The critical area may be determined with the help of measurements of an actual wind turbine or may be determined with the help of simulations, for example.

The fourth information is determined depending on the first, the second and the third information. That is, the first, the second and the third information are used to determine directly or indirectly whether the tilt bending moment for which the first information is representative and the thrust force for which the second information is representative lie within the critical area. For example, it is determined whether the two-dimensional point with the coordinates of the thrust force and the tilt bending moment extracted from the first and second information lies within the two-dimensional critical area. Determining the fourth information may be done in real time, i.e. immediately after providing the first, the second and the third information. For example, the fourth information is determined within a time interval of at most 1 s after the measurements for the tilt bending moment and/or for the thrust force have been taken.

If the fourth information is representative for the tilt bending moment and the thrust force to lie within the critical area, an output signal is generated. The output signal is, in particular, an electric signal which can be transmitted via a wire or wirelessly. The output signal is configured to cause the pitch setting system to change the pitch angle of the at least one rotor blade in order to leave the critical area. That is, the output signal comprises information which can be evaluated by the pitch setting system and which can be translated by the pitch setting system into a mechanical movement of the at least one rotor blade. In particular, the pitch setting system then changes the pitch angle of the at least one rotor blade such that the thrust force and/or the tilt bending moment acting on the rotor are changed such that they no longer lie in the critical area. For example, the thrust force and/or the absolute value of the tilt bending moment are reduced. The information of the output signal may be representative for whether the pitch setting system should change the pitch angle and also by how much it should change the pitch angle.

The generation of the output signal and, optionally, also the setting of the pitch angle may be done in real time. It may be done within a time interval after the measurements for the first and/or for the second information have been taken which is shorter than the time interval for a full rotation or for half a rotation of the rotor, e.g. within a time interval of at most 2 s.

The pitch angle of the rotor blade is defined, for example, as the angle between the chord line of the rotor blade and the plane of rotation of the rotor (rotor plane). The change of the pitch angle of the rotor blade is, for example, such that the angle of attack of the rotor blade is reduced.

The output signal may be configured to cause the pitch setting system to change the pitch angle of the at least one rotor blade and to maintain that changed pitch angle for at least one or at least two full rotations of the rotor. For example, the changed pitch angle is maintained until a newly determined/provided first information and a newly determined/provided second information is representative for the tilt bending moment and the thrust force to lie outside the critical area. Afterwards, a further output signal may be generated which changes the pitch angle back to its value before the change based on the output signal.

As becomes apparent from the last paragraph, the described method steps of providing the first, second and third information, determining the fourth information and, possibly, generating the output signal may be executed repeatedly, e.g. at least once or at least five times or at least ten times per full rotation of the rotor.

According to a further embodiment, the rotor comprises two or more rotor blades. For example, the rotor comprises exactly three rotor blades. All features disclosed in connection with the at least one rotor blade are also disclosed for all other rotor blades.

According to a further embodiment, the output signal is configured to collectively change the pitch angles of all rotor blades. This means that the pitch angles of all rotor blades are changed simultaneously, e.g. by the same amount.

According to a further embodiment, the method for operating a wind turbine comprises a further step in which fifth information is provided. The fifth information is representative for a bending moment of the at least one rotor blade.

The bending moment of a rotor blade is herein meant to be the bending moment acting on the rotor blade and causing deflection of the rotor blade out of the rotor plane. The bending moment is, therefore, also referred to as "out of plane" bending moment. It is a quantity in a reference frame of the rotor blade. This means, it is a quantity of a reference frame rotating with the rotor blade, herein referred to as "rotating reference frame".

When comparing bending moments, absolute values of the bending moments are, for example, compared.

The fifth information is, in particular, determined with the help of measurements. Consequently, the bending moment extractable from the fifth information may be referred to as measured bending moment. It may be an estimation of the actual bending moment of the rotor blade. The fifth information may comprise the corresponding measurement data.

Additionally, the fifth information may be representative for the position of the rotor blade, said position being assigned to the bending moment. The position being assigned to the bending moment is, in particular, the position the rotor blade has when the measurements for determining the bending moment are taken. For example, the position of the at least one rotor blade is also determined from measurements, for example from measurements of the azimuthal position of the rotor. Herein, the azimuthal angle or position refers to the rotor plane.

According to a further embodiment, the first information is determined depending on the fifth information with the help of a coordinate transformation from a rotating reference frame to a fixed reference frame. With the help of the coordinate transformation, the bending moment of the at least one rotor blade can be translated into the tilt bending moment of the rotor.

The rotating reference frame is, in particular, the above-mentioned reference frame of the rotor blade rotating with the rotor blade and the fixed reference frame is, in particular, the above-mentioned reference frame fixed with respect to the environment or with respect to the tower, respectively.

For example, in the case of several rotor blades, the fifth information is representative for the bending moments of all rotor blades and also for the assigned positions of the rotor blades. The first information is then determined depending on the fifth information. For example, the tilt bending moment of the rotor is calculated from the bending moments of all rotor blades with the help of the coordinate transformation. The bending moments of the rotor blades are, in particular, representative for the same time. For example, measurements taken from which the individual bending moments are determined, are taken at the same time or within a time interval which is shorter than half a rotation or a quarter of a rotation of the rotor.

According to a further embodiment, the coordinate transformation is a Coleman transformation, also known as DQ transformation or Park transformation.

According to a further embodiment, the fifth information is determined depending on measurements taken with the help of a first sensor system. The first sensor system is, for example, part of the wind turbine. The first sensor system may comprise one or more strain sensors, e.g. optical fiber sensors or strain gauge sensors. Moreover, the first sensor system may comprise a position sensor for measuring the position of the at least one rotor blade.

According to a further embodiment, the second information is determined depending on measurements taken with the help of a second sensor system. The second sensor system may be part of the wind turbine. For example, the second sensor system comprises at least one sensor for measuring the pitch angle of the at least one rotor blade, at least one sensor for measuring the rotational velocity of the rotor and/or at least one sensor for measuring the power output of the wind turbine. For example, the thrust force can be determined with the help of a lookup table and depending on the measurements of the second sensor system.

According to a further embodiment, the third information is determined with the help of computer simulations. The computer simulations simulate, for example, the distance of the at least one rotor blade to the tower when passing the tower in dependency on the tilt bending moment and the thrust force. Additionally, the simulations may include the influence of the wind turbulence intensity on the distance between the at least one rotor blade and the tower. From the simulations, it can be determined at which thrust forces and which tilt bending moments the rotor blade comes too close to the tower or collides with the tower. These thrust forces and tilt bending moments then define the critical area, for example.

According to a further embodiment, the method comprises a step in which sixth information is provided. The sixth information is representative for a desired pitch angle change to be caused by the pitch setting system.

For example, the desired pitch angle change is determined depending on the first, the second and/or the third information. For instance, the desired pitch angle change depends on where in the critical area the tilt bending moment and the thrust force are located. For example, the desired pitch angle change is larger when the tilt bending moment and the thrust force are further away from a border to the uncritical area than when the tilt bending moment and the thrust force are closer to that border. The desired pitch angle change may also be determined with the help of simulations.

According to a further embodiment, the output signal comprises the sixth information and is configured to cause the pitch setting system to change the pitch angle of the at least one rotor blade by the desired pitch angle change. For example, the desired pitch angle change is between 0.1° and 3°, inclusive.

According to a further embodiment, the method comprises a step in which seventh information is provided. The seventh information is representative for the wind turbulence intensity at the rotor. The seventh information may also be determined with the help of measurement, e.g. the measurements of the second sensor systems. The seventh information is, in particular, representative for the same time as the first, the second and/or the fifth information, i.e., the measurements are taken, for example, within the time intervals specified above.

According to a further embodiment, the sixth information is determined depending on the seventh information. For example, the greater the wind turbulence intensity, the greater the desired pitch angle change. Thus, the desired pitch angle change is dependent on the wind turbulence intensity. The dependency may be determined with the help of simulations or measurements of an actual wind turbine.

Next, the computer program, the computer-readable data carrier and the control device are specified.

According to an embodiment, the computer program comprises instructions which, when the program is executed by a computer, cause the computer to carry out the method for operating a wind turbine according to any one of the embodiments described herein.

According to an embodiment, the computer-readable data carrier has stored thereon the computer program.

According to an embodiment, the control device comprises at least one processor configured to perform the method for operating a wind turbine according to any one of the embodiments described herein. The control device may be a computer, for example. The control device may be part of the wind turbine or may be an external device, which is, for example, several km away from the wind turbine, like a computer in a control station. For example, the control device is configured to communicate with the wind turbine via a wire or wirelessly.

Next, the control system for operating a wind turbine is specified. The control system is, in particular, configured to perform the method according to any one of the embodiments described herein. Therefore, all features disclosed for the method are also disclosed for the control system and vice versa.

According to an embodiment, the control system is a control system for operating a wind turbine which has a rotor with at least one rotor blade, a tower and a pitch setting system for setting the pitch angle of the at least one rotor blade. The control system comprises a first sensor system configured to take measurements with the help of which the tilt bending moment acting on the rotor is determinable and a second sensor system configured to take measurements with the help of which the thrust force acting on the rotor is determinable. The control system further comprises the control device as specified herein. The control device is signally connectable or connected to the sensor systems in order to provide the control device with the measurements of the sensor systems. The control device is signally connectable or connected to the pitch setting system in order to provide the pitch setting system with the output signal of the control device so that the pitch setting system sets the pitch angle of the at least one rotor blade depending on the output signal.

For example, the first and/or the second sensor system are signally connectable or are signally connected with the control device via a wire or wirelessly. The first sensor system and/or the second sensor system and/or the control device may be part of the wind turbine, i.e. may be integrated into the wind turbine, or may be external. The control device may be signally connected or connectable to the pitch setting system via wire or wirelessly.

The control device may, accordingly, comprise interfaces for receiving data from the first sensor system and the second sensor system and an interface for sending the output signal.

The pitch setting system may be part of the control system. The pitch setting system comprises, for example, at least one actuator for each of the rotor blades, wherein the actuator is configured to change and/or set the pitch angle of the respective rotor blade.

According to a further embodiment, the first sensor system comprises at least one strain sensor coupled to the at least one rotor blade. For example, each rotor blade is assigned at least one strain sensor coupled thereto. For example, each rotor blade is assigned at least three or at least four strain sensors. Strain sensors allow the bending moment acting on the rotor blade to be determined. All features disclosed for the at least one strain sensor are herein also disclosed for all other strain sensors.

The at least one strain sensor may be integrated into the respective rotor blade or may be applied to an outer surface of the respective rotor blade. The at least one strain sensor may be a temperature compensating strain sensor.

According to a further embodiment, the first sensor system comprises at least one position sensor configured to take measurements from which the position of the at least one rotor blade is determinable. For example, the position sensor measures the angular position of the rotor and, from that, the position of the at least one rotor blade can be determined.

According to a further embodiment, the at least one strain sensor is a fiber optic strain sensor.

According to a further embodiment, the at least one strain sensor is a strain gauge sensor.

The at least one rotor blade may be assigned several fiber optic strain sensors or several strain gauge sensors or a combination of at least one fiber optic strain sensor and at least one strain gauge sensor.

According to a further embodiment, the second sensor system comprises at least one sensor for measuring the pitch angle of the at least one rotor blade. Additionally or alternatively, the second sensor system may comprise at least one sensor for measuring the rotational velocity of the rotor. The second sensor system may, additionally or alternatively, comprise a sensor for measuring the power output of the wind turbine. Particularly, from the combination of measurements of the mentioned sensors, the thrust force and the wind turbulence intensity at the rotor can be determined.

Next, the wind turbine is specified.

According to an embodiment, the wind turbine comprises a rotor with at least one rotor blade, a tower and a pitch setting system for setting the pitch angle of the at least one rotor blade. Furthermore, the wind turbine comprises the control system according to any one of the embodiments described herein.

Hereinafter, the method for operating a wind turbine, the control device, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figure 2 and 3 show the behavior of an exemplary embodiment of the wind turbine during operation at different conditions,
Figure 4 shows a flowchart of an exemplary embodiment of the method for operating a wind turbine,
Figure 5 shows a flowchart of a further exemplary embodiment of the method for operating a wind turbine,
Figure 6 shows an exemplary embodiment of the control system and the control device,
Figure 7 shows an exemplary embodiment of simulations,
Figure 8 shows a further exemplary embodiment of the method for operating a wind turbine.

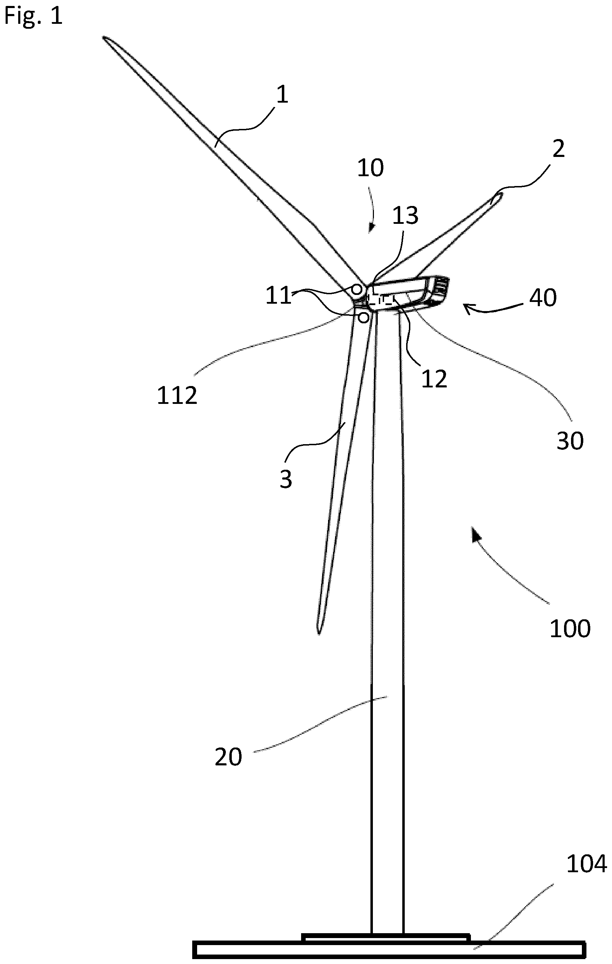

Figure 1 shows a schematic view of an exemplary embodiment of a wind turbine 100 which comprises a tower 20. The tower 20 is fixed to the ground by means of a foundation 104. At one end of the tower 20, opposite to the ground, a nacelle 106 is rotatably mounted. The nacelle 106, for example, comprises a generator which is coupled to a rotor 10 via a gearbox (not shown). The rotor 10 comprises one or more (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the rotor shaft and the gearbox. The generator converts the mechanical energy of the rotor 10 into electrical energy.

In order to set the rotational velocity and the power consumption, the wind turbine 100 comprises a pitch setting system 13 which is configured to set the pitch angles of the rotor blades 1, 2, 3. The pitch setting system 13 may be configured to set the pitch angle of each rotor blade 1, 2, 3 individually and/or to set the pitch angles collectively. For example, the pitch setting system 13 comprises at least one actuator for each rotor blade 1, 2, 3 via which an electrical signal is translated into a mechanical movement of the respective rotor blade 1, 2, 3.

The wind turbine 100 further comprises a control system 40 configured to operate the wind turbine 100. The control system 40 comprises a first sensor system 11, a second sensor system 12 and a control device 30.

The first sensor system 11 comprises, for example, three or four strain sensors for each rotor blade 1, 2, 3, wherein the strain sensors are coupled to the respective rotor blade 1, 2, 3. The strain sensors may be fiber optic strain sensors, for example. The measurement signals from the strain sensors may be used to estimate/determine the bending moment acting on the respective rotor blade 1, 2, 3. Furthermore, the first sensor system 11 may comprise at least one position sensor with the help of which the positions of the rotor blades 1, 2, 3 can be determined.

The second sensor system 12 comprises, for example, at least one sensor for measuring the pitch angles of the rotor blades 1, 2, 3, at least one sensor for measuring the rotational velocity of the rotor 10 and at least one sensor for measuring the power output of the wind turbine. The measurement signals of these sensors can be used to estimate/determine the thrust force acting on the rotor 10 and the wind turbulence intensity at the rotor 10.

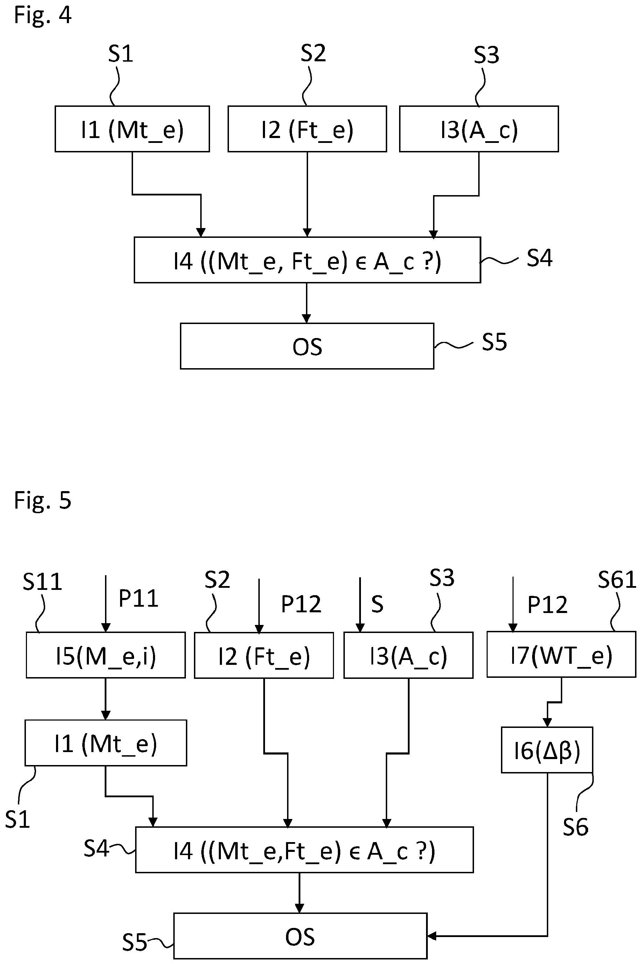

The control device 30 comprises, for example, at least one processor. It may be located in the nacelle 106. The control device 30 is signally coupled to the sensor systems 11, 12 and the pitch setting system 13 so that it can communicate with the systems 11, 12, 13. The measurements from the sensor systems 11, 12 are processed by the control device 30 and, depending on this, an output signal is possibly sent to the pitch setting system 13 in order to adjust the pitch angles of the rotor blades 1, 2, 3. This will be explained in more detail in connection with figures 4 and 5.

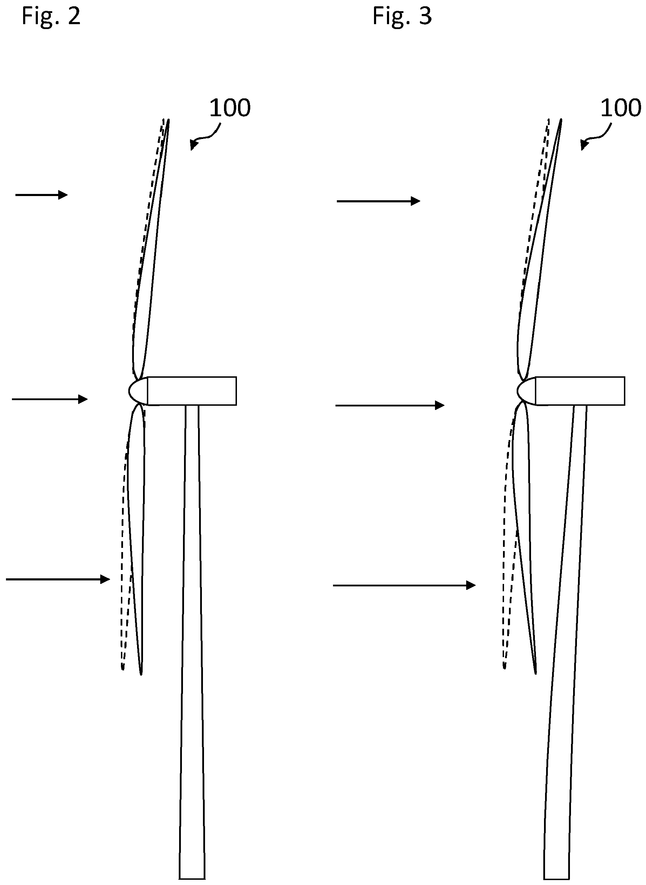

Figure 2 shows the wind turbine 100 from a side view during operation of the wind turbine 100. Wind acting on the wind turbine 100 is indicated by the arrows. As can be seen, the wind has a higher velocity closer to the ground than further away from the ground (so-called negative wind shear). Due to the forces acting on the rotor blades, the rotor blades are deflected with respect to their rest positions (the rest positions are indicated by the dashed lines). Moreover, due to the profile in the wind velocity, the rotor blade passing the tower, i.e. the rotor blade closer to the ground, is deflected more than the rotor blade further away from the tower. Consequently, a tilt bending moment acts on the rotor in order to tilt the rotor plane.

In figure 3, a similar situation as in figure 2 is shown but now with an overall higher wind velocity and corresponding greater wind turbulence intensities. Also in this case, there is a profile in the wind velocity with higher wind velocities closer to the ground. As can be seen, the deflection of the rotor blades is now larger compared to figure 2. Moreover, due to the greater thrust force acting on the rotor, the tower is bended. Due to the higher deflection of the rotor blades and the (greater) bending of the tower, the rotor blades come very close to the tower when passing the tower. This bears the risk of collision. With the method for operating a wind turbine described in the following exemplary embodiments, the risk of a collision can, however, be reduced.

Figure 4 shows a first exemplary embodiment of the method for operating a wind turbine, for example the wind turbine of figure 1. The method comprises a step S1, in which first information I1 is provided, a step S2 in which second information I2 is provided and a step S3 in which third information I3 is provided. The steps may be executed at the same time or one after the other.

The first information I1 is representative for the tilt bending moment Mt_e acting on the rotor 10. The second information I2 is representative for the thrust force Ft_e acting on the rotor 10. The tilt bending moment Mt_e and the thrust force Ft_e refer to the same time or time range. The third information I3 is representative for a predetermined critical area A_c of thrust forces and tilt bending moments.

In step S4, fourth information I4 is determined depending on the first I1, the second I2 and the third I3 information. The fourth information I4 is representative for whether the tilt bending moment Mt_e and the thrust force Ft_e lie within the predetermined critical area A_c. If this is the case, i.e. if the fourth information I4 is representative for thrust force Ft_e and the tilt bending moment Mt_e to lie inside the critical area A_c, a step S5 is executed in which an output signal OS is generated. The output signal OS is configured to cause the pitch setting system 13 to change the pitch angles β_1, β_2, β_3, β_i for short, of the rotor blades 1, 2, 3. For example, the pitch angles β_i of all rotor blades 1, 2, 3 are changed collectively, i.e. simultaneously and, optionally, by the same amount.

Figure 5 shows a second exemplary embodiment of the method. The steps S1 to S5 are basically the same as in figure 4. Before step S1, a step S11 is performed, in which fifth information I5 is provided. The fifth information I5 is representative for the bending moment M_e,1, M_e,1, M_e,1, M_e,i for short acting on the rotor blades 1, 2, 3 and the positions of the rotor blades 1, 2, 3. The first information I1 is then determined depending on the fifth information I5 with the help of a coordinate transformation from a rotating reference frame of the rotor blades 1, 2, 3 to a fixed reference frame. With the help of this coordinate transformation, the tilt bending moment Mt_e can be determined from the bending moments M_e,i of the individual rotor blades 1, 2, 3.

The fifth information I5 itself is determined depending on measurements P11 taken with the help of the first sensor system 11. The second information I2 is determined depending on measurements taken with the help of the second sensor system 12.

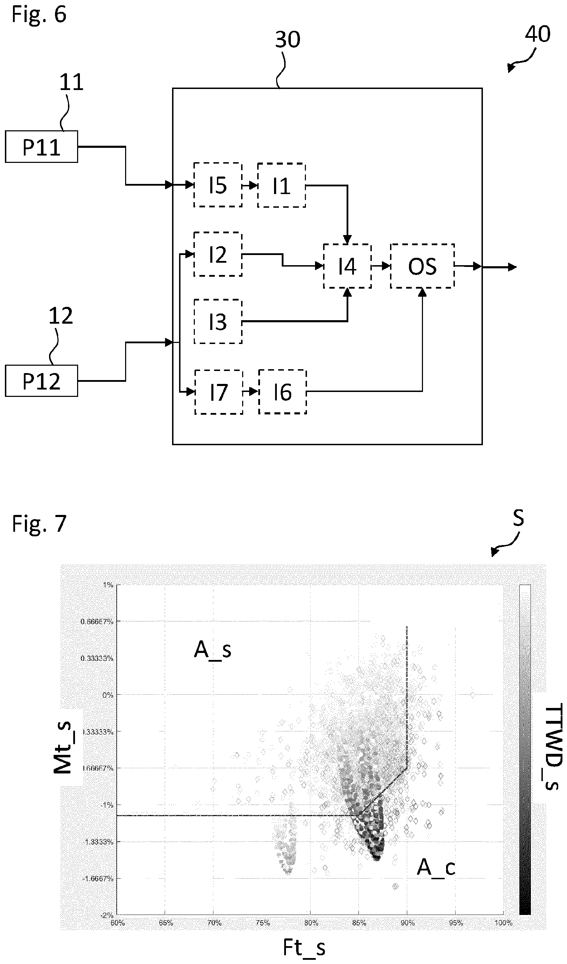

The third information I3 is determined with the help of computer simulations S of the wind turbine 100 simulating the distances TTWD_s,1, TTWD_s,2, TTWD_s,3, TTWD_s,i for short, of the rotor blades 1, 2, 3 to the tower 20 when passing the tower 20 in dependency on the simulated tilt bending moment Mt_s and the simulated thrust force Ft_s acting on the rotor. This will be explained in more detail in connection with figure 7.

In the exemplary embodiment of figure 5, two further steps S6 and S61 are executed. The step S61 is executed before the step S6. In the step S61, seventh information I7 is determined depending on the measurements P12 taken with the help of the second sensor system 12. The seventh information I7 is representative for the wind turbulence intensity WT_e at the rotor 10.

In step S6, sixth information I6 is determined depending on the seventh information 17. The sixth information I6 is representative for a desired pitch angle change Δβ to be caused by the pitch setting system 13. For example, the higher the wind turbulence intensity WT_e, the larger the desired pitch angle change Δβ. Differently to what is shown in figure 5, the sixth information I6 may additionally be determined depending on the first I1, the second I2 and the third I3 information. For example, the desired pitch angle change Δβ is determined to be so large that after changing the pitch angles β_i by the desired pitch angle change Δβ, a newly determined thrust force and a newly determined tilt bending moment lie outside the critical area A_c, namely in a save area A_s for which there is a low(er) risk of a rotor blade - tower collision.

Figure 6 shows an exemplary embodiment of the control system 40. The control system 40 comprises the sensor systems 11, 12, with which the measurements P11, P12 can be taken. These measurements are provided to the control device 30 which performs the method steps as described in connection with figures 4 and 5 and delivers an output signal OS, which the control system 40 then transmits to the pitch setting system 13 of the wind turbine 100 in order to adjust the pitch angles.

Figure 7 shows simulation results S in form of a diagram. The y-axis indicates the simulated tilt bending moments Mt_s acting on the rotor 10 and the x-axis indicates the simulated thrust forces Ft_s acting on the rotor 10. The color gradient of the simulated points indicates the simulated distances of the rotor blades TTWD_s when passing the tower 10. The darker a simulated point, the closer the rotor blade comes to the tower when passing the tower.

As expected, the simulations S indicate that at high negative tilt bending moments Mt_s in combination with large thrust forces Ft_s, the rotor blades come very close to the tower. With the help of the simulations S, a border (indicated by the solid line) can be predefined, separating a critical area A_c (comparable high risk of collision) from a safe area A_s (comparable low risk of collision). The simulation results S can then be used for performing the method. When the thrust force Ft_e and the tilt bending moment Mt_e lie below the border, i.e. in the critical area A_c, the output signal OS is generated. If the thrust force Ft_e and the tilt bending moment Mt_e lie in the safe area A_s, the pitch angles of the rotor blades are, for example, left as they are.

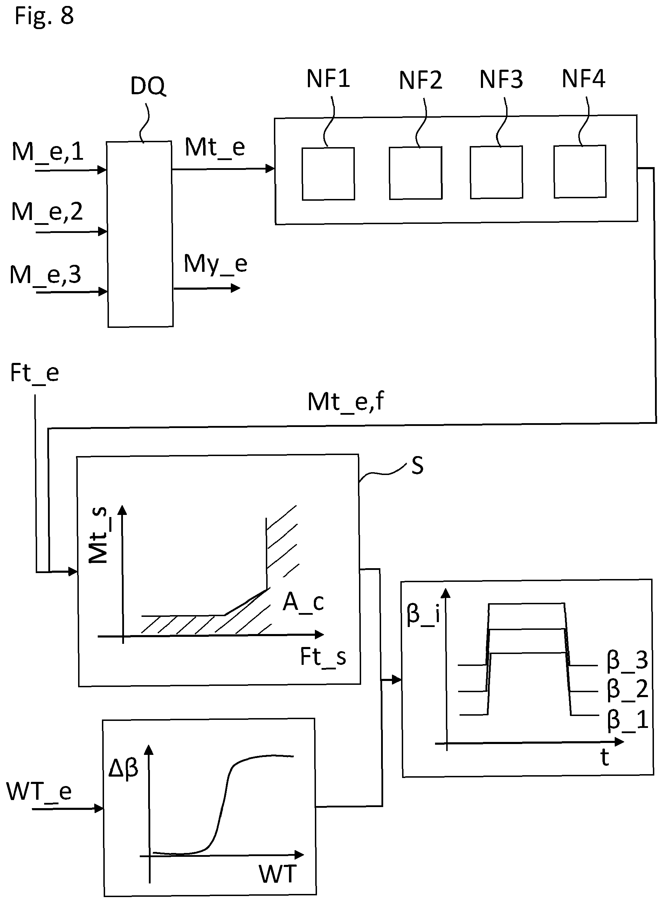

Figure 8 shows a further exemplary embodiment of the method indicating the different calculations done when performing the method. The bending moments M_e,i, which are for example obtained from the measurements taken with the first sensor system 11, are converted into a tilt bending moment Mt_e and a yaw bending moment My_e by using a coordinate transformation DQ from the rotating reference frame of the rotor blades into a fixed reference frame. The coordinate transformation is a Coleman transformation, for example.

The tilt bending moment Mt_e is then filtered using a series of notch filters NF1, NF2, NF3, NF4 in order to get rid of systematic effects.

It is then determined whether the filtered, tilt bending moment Mt_e,f and the thrust force Ft_e lie in the critical area A_c obtained with the help of simulations S. If this is the case, the pitch setting system 13 changes the pitch angles β_i of the individual rotor blades 1, 2, 3 over a certain time interval, which is for example at least one full rotation of the rotor 10 or at least two full rotations of the rotor 10. As can be seen in figure 8, the pitch angle change Δβ is determined depending on the wind turbulence intensity WT_e. The higher the wind turbulence intensity WT_e, the higher the pitch angle change Δβ.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs

- 1: first rotor blade
- 2: second rotor blade
- 3: third rotor blade
- 10: rotor
- 11: first sensor system
- 12: second sensor system
- 13: pitch control system
- 20: tower
- 30: control device
- 40: control system
- 100: wind turbine
- 104: foundation
- 106: nacelle
- 112: rotor hub

- I1: first information
- I2: second information
- I3: third information
- I4: fourth information
- I5: fifth information
- I6: sixth information
- I7: seventh information
- OS: output signal

- Mt_e: tilt bending moment
- My_e: yaw bending moment
- Ft_e: thrust force
- A_c: critical area
- A_s: safe area
- M_e,i: bending moment
- β_i: pitch angle
- WT_e: wind turbulence intensity
- Δβ: desired pitch angle change
- P11: measurements
- P12: measurements
- S: simulations
- NF1 ..NF4: Notch filters
- TTWD_s,i: simulated distance between blade and tower
- Mt_s: simulated tilt bending moment
- Ft_s: simulated thrust force
- DQ: coordinate transformation

- S1 to S5: method steps
- S11: method step
- S61: method step

## Claims

1. Method for operating a wind turbine (100) having a rotor (10) with at least one rotor blade (1, 2, 3), a tower (20) and a pitch setting system (13) for setting the pitch angle (β_i) of the at least one rotor blade (1, 2, 3), the method comprising
- (S1) providing first information (I1) which is representative for the tilt bending moment (Mt_e) acting on the rotor (10),
- (S2) providing second information (12) which is representative for the thrust force (Ft_e) acting on the rotor (10);
- (S3) providing third information (13) which is representative for a critical area (A_c) of thrust forces and tilt bending moments;
- (S4) determining fourth information (14) depending on the first (I1), the second (12) and the third (13) information which is representative for whether the tilt bending moment (Mt_e) and the thrust force (Ft_e) lie within the critical area (A_c); and, if this is the case,
- (S5) generating an output signal (OS) which is configured to cause the pitch setting system (13) to change the pitch angle (β_i) of the at least one rotor blade (1, 2, 3) in order to leave the critical area (A_c).

2. Method according to claim 1, wherein
- the rotor (10) comprises two or more rotor blades (1, 2, 3),
- the output signal (OS) is configured to collectively change the pitch angles (β_i) of all rotor blades (1, 2, 3).

3. Method according to claim 1 or 2, further comprising
- (S11) providing fifth information (15) which is representative for a bending moment (M_e,i) of the at least one rotor blade (1, 2, 3), wherein
- the first information (I1) is determined depending on the fifth information (15) with the help of a coordinate transformation (DQ) from a rotating reference frame to a fixed reference frame.

4. Method according to claim 3, wherein
- the coordinate transformation (DQ) is a Colman transformation.

5. Method according to claim 3 or 4, wherein
- the fifth information (15) is determined depending on measurements (P11) taken with the help of a first sensor system (11).

6. Method according to any one of the preceding claims, wherein
- the second information (12) is determined depending on measurements (P12) taken with the help of a second sensor system (12).

7. Method according to any one of the preceding claims, wherein
- the third information (13) is determined with the help of computer simulations (S) of the wind turbine (100) simulating the distance (TTWD_s,i) of the at least one rotor blade to the tower when passing the tower in dependency on the tilt bending moment (Mt_s) and the thrust force (Ft_s).

8. Method according to any one of the preceding claims, further comprising
- (S6) providing sixth information (16) which is representative for a desired pitch angle change (Δβ) to be caused by the pitch setting system (13), wherein
- the output signal (OS) comprises the sixth information (16) and is configured to cause the pitch setting system (13) to change the pitch angle (β_i) of the at least one rotor blade (1, 2, 3) by the desired pitch angle change (Δβ).

9. Method according to claim 8, further comprising
- (S61) providing seventh information (17) which is representative for the wind turbulence intensity (WT_e) at the rotor (10), wherein
- the sixth information (16) is determined depending on the seventh information (17).

10. Computer program comprising instructions which, when the program is executed by a computer, cause the computer to carry out the method of any one of claims 1 to 9.

11. Computer-readable data carrier having stored thereon the computer program of claim 10.

12. Control device (30) comprising at least one processor configured to perform the method of any one of claims 1 to 9.

13. Control system (40) for operating a wind turbine (100) having a rotor (10) with at least one rotor blade (1, 2, 3), a tower (20) and a pitch setting system (13) for setting the pitch angle (β_i) of the at least one rotor blade (1, 2, 3), the control system (40) comprising
- a first sensor system (11) configured to take measurements (P11) with the help of which the tilt bending moment (Mt_e) acting on the rotor (10) is determinable,
- a second sensor system (12) configured to take measurements (P12) with the help of which the thrust force (Ft_e) acting on the rotor (10) is determinable,
- the control device (30) according to claim 12, wherein
- the control device (30) is signally connectable to the sensor systems (11, 12) in order to provide the control device (30) with the measurements (P11, P12) of the sensor systems (11, 12),
- the control device (30) is signally connectable to the pitch setting system (13) in order to provide the pitch setting system (13) with the output signal (OS) of the control device (30) so that the pitch setting system (13) sets the pitch angle (β_i) of the at least one rotor blade (1, 2, 3) depending on the output signal (OS).

14. System (40) according claim 13, wherein
- the first sensor system (11) comprises at least one strain sensor coupled to the at least one rotor blade (1, 2, 3),
- the second sensor system (12) comprises
- at least one sensor for measuring the pitch angle (β_i) of the at least one rotor blade (1, 2, 3),
- at least one sensor for measuring the rotational velocity of the rotor (10).

15. Wind turbine (100) comprising
- a rotor (10) with at least one rotor blade (1, 2, 3),
- a tower (20),
- a pitch setting system (13) for setting the pitch angle (β_i) of the at least one rotor blade (1, 2, 3),
- the control system (40) according to any one of claims 13 and 14.
